Europäisches Patentamt

European Patent Office

Office européen des brevets

(11) Publication number: **0 325 887**
**A1**

## (12) EUROPEAN PATENT APPLICATION

(21) Application number: **88600014.0**

(22) Date of filing: **28.12.88**

(51) Int. Cl.⁴: **C05G 1/00**

(30) Priority: **28.12.87 GR 872024**

(43) Date of publication of application:
**02.08.89 Bulletin 89/31**

(84) Designated Contracting States:
**AT BE CH DE ES FR GB GR LI LU NL SE**

(71) Applicant: **PHOSPHORIC FERTILIZERS INDUSTRY LTD.**
**97, Syngrou Ave.**
**GR-11745 Athens(GR)**

(72) Inventor: **Angelopoulos, George**
**83, 3rd Septemvriou Str.**
**Athens(GR)**

(74) Representative: **Metallinou-Gafou, Margarita**
**14, Sina Street**
**GR-106 72 Athens(GR)**

(54) **Production of fertilizer NP and NPK with NP slurry process achieving increased percentage of water solubility.**

(57) The present invention relates to the production of low water content slurry (6-10 % $H_2O$) exclusively in the preneutralizer (PN) of a classical SLURRY PROCESS NP/NPK plant with simultaneous maximum addition of nitrophosphate slurry.

The production of slurry includes the complete conversion of $Ca(NO_3)_2$ contained in the nitrophosphate slurry to $CaHPO_4$ and the slurry fluidity is maintained by the addition of safe amounts of $NH_4NO_3$ solution.

As a consequence from the production of such a slurry, the capacity of a classical SLURRY PROCESS NP/NPK plant can be increased considerably and the cost per ton of produced fertilizer can be reduced drastically WITHOUT USING PIPE REACTOR OR EVAPORATOR.

DRAWING N° 1

# PRODUCTION OF FERTILIZERS NP AND NPK WITH SLURRY PROCESS ACHIEVING INCREASED PERCENTAGE OF WATER SOLUBILITY

The present invention relates to the production of low water content slurry (6-10 % $H_2O$)-,exclusively in the preneutralizer of a classical SLURRY PROCESS (NP / NPK) fertilizers plant, with simultaneous maximum addition of nitrophosphate slurry without use of PIPE REACTOR or EVAPORATOR.

The new invention refers to a classical SLURRY PROCESS NP/NPK fertilizers plant with preneutralizer (PN). It aims to the increase of capacity of the plant due to the production of low water content slurry and simultaneously to the decrease of the production cost per ton of fertilizer as a consequence of the addition of nitrophosphate slurry and the increase of capacity.

The present practice of NPK production is divided into two main process categories i.e.

1.The use of PIPE REACTOR with simultaneous addition of $NH_4NO_3$ solution to the granulator and

2.The NITRO-ROUTE PROCESS (ODDA PROCESS) with nitroattack of phosphate rock,where the produced NP slurry is cooled, filtered for partial removal of $Ca(NO_3)_2$ analogically to the desired water solubility of the produced fertilizer, and then the filtrate (consisting of $H_3PO_4$ and the remaining $Ca(NO_3)_2$), is subjected to ammoniation for conversion of $Ca(NO_3)_2$ to $CaHPO_4$. $NH_4NO_3$ solution is added to the ammoniated slurry which is then passing the evaporator for partial removal of water content,and then feeded to the pugmill or the prilling tower.

In a classical slurry process plant,the slurry in the preneutralizer (PN) is produced by the reaction of $NH_3$, $H_3PO_4$, $H_2SO_4$ and $NH_4NO_3$. The produced slurry with a water content 14-21 % is fed to the granulator where $NH_3$, $K_2SO_4$ or KCl and FILLER are also fed. A classical process of drying, screening, cooling and coating then follows.

The new invention refers to the production of slurry with low water content exclusively in the preneutralizer (PN) for NP/NPK fertilizers production with simultaneous use of nitrophosphate slurry. The nitrophosphate slurry is produced in separate reactors and then fed to the preneutralizer.

More specifically the main features of the process are:

1.Production of low water content slurry (6-10 %) in the preneutralizer (PN) with simultaneous maximum addition of nitrophosphate slurry, depending on the material and energy balance of the produced NP/NPK grade.

2. The production of such slurry is possible for NP/NPK fertilizers when N and P ($P_2O_5$) meet the following condition:
N > 0,7 P(1)

3. Complete conversion of $Ca(NO_3)_2$ contained in the nitrophosphate slurry,to $CaHPO_4$ under a pH of 5-6. PH conditions are reached keeping the ammoniation ratio of $H_3PO_4$ between 1,02 - 1,16. (Ammoniation ratio = mole $NH_3$/mole $H_3PO_4$).

4. For the complete conversion of $Ca(NO_3)_2$ to $CaHPO_4$ the following condition should also apply:
K moles $Ca(NO_3)_2$ < K moles $H_3PO_4$     (2)
K moles of $H_3PO_4$ are the sum of those directly fed by fresh $H_3PO_4$ and those contained in the nitrophosphate slurry.

5. Due to low water content of the slurry,the desired fluidity is reached by the addition of $NH_{4NO3}$ solution within safe limits . The remaining $NH_4NO_3$ solution should be also fed to the granulator.

6. All the above reactions take place exclusively in the preneutralizer (PN).

The advantages of the invention are:

a. Increase of plant capacity without use of RIPE REACTOR OR EVAPORATOR.

b. Decrease of the production cost per ton of fertilizer as a consequence of the addition of nitrophosphate slurry and increased capacity.

c. Combination of principal advantages of the two main present process categories (PIPE REACTOR and NITRO-ROUTE) in one PROCESS (preneutralizer).

d. Avoidance of expensive investements for the conversion of an existing plant to either of the previously mentioned main process categories.

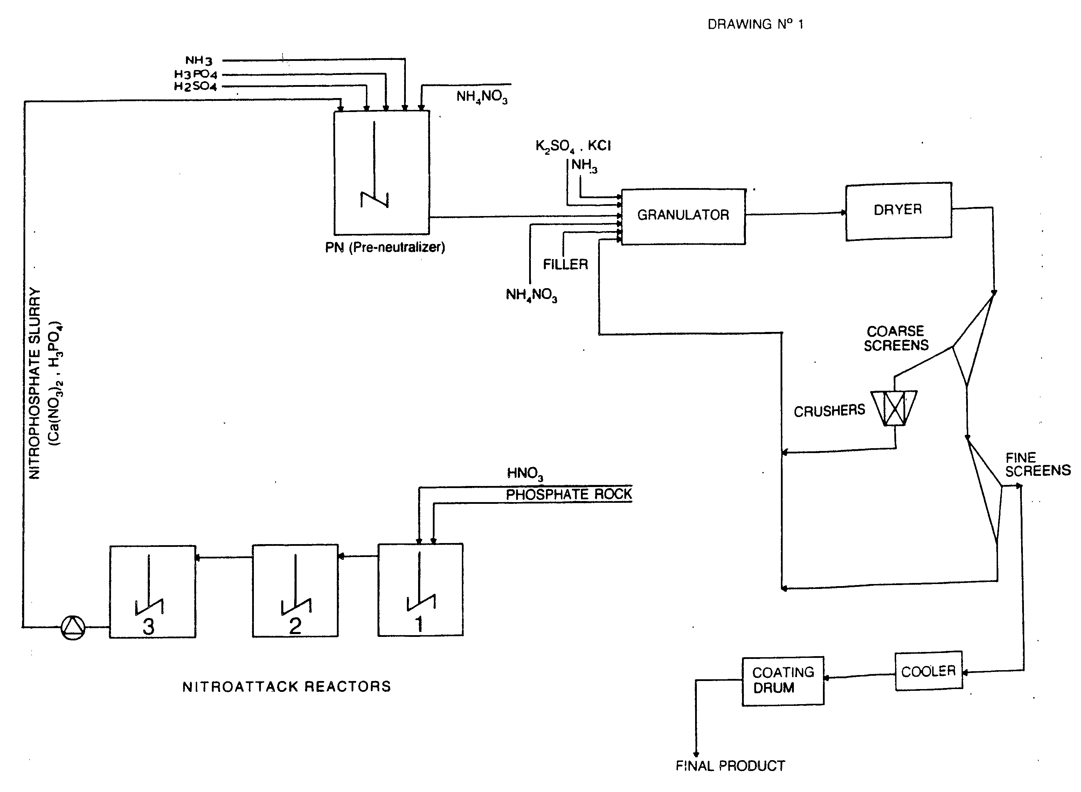

## Claims

1. A process for the production of slurry with low water content (6-10 % $H_2O$) exclusively in the preneutralizer (PN) of a classical SLURRY PROCESS fertilizers plant with simultaneous maximum addition of nitrophosphate slurry,depending on material and energy balance of the NP or NPK grade fertilizers,without use of PIPE REACTOR or EVAPORATOR.

2. A process according to claim 1,for the production of slurry for fertilizers NP or NPK,where N and P in the fertilizer meet the condition: N > 0,7 P.

3. A process according to claims 1 and 2,for the production of slurry with low water content,where the complete conversion of $Ca(NO_3)_2$ to $CaHPO_4$ is achieved under the condition: K mole $Ca(NO_3)_2$ < K mole $H_3PO_4$.

4. A process for the production of slurry for fertilizers NP or NPK, accoridng to claims 1, 2, and 3, where pH conditions in the preneutralizer (PN) are pH 5-6,and pH conditions are reached keeping the ammoniation ratio of $H_3PO_4$ between 1,02 - 1,16.(Ammoniation ratio R = mole $NH_3$/mole $H_3PO_4$).

5. A process for the production of low water content slurry according to claims 1, 2, 3 and 4,where the fluidity of the slurry is reached by addition of $NH_4NO_3$ solution within safe limits.

6. Increase of plant capacity and decreases of production cost per ton of fertilizer according to the production of low water content slurry as claimed in claims 1 to 5.

DRAWING Nº 1

EP 0 325 887 A1

European Patent Office

EUROPEAN SEARCH REPORT

Application Number

EP 88 60 0014

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | US-A-3 436 205 (C.H. DAVIS)<br>* Column 4, lines 23-34; column 5, line 69 - column 6, line 63; column 7, lines 19-26; table 5; figure 1; column 3, lines 3-8; claims *<br>--- | 1-3,6 | C 05 G 1/00 |
| Y | GB-A-1 147 545 (ESSO RESEARCH AND ENGINEERING CO.)<br>* Page 1, lines 63-86; page 2, lines 42-83; claims; figure 1 *<br>--- | 1-3,6 | |
| A | US-A-3 485 580 (P.B. MISCHEL et al.)<br>* Column 2, line 69 - column 3, line 2 *<br>--- | 1 | |
| A | FR-A-1 311 532 (FISONS FERTILIZERS LTD)<br>* Abstract; page 2 *<br>--- | 4,5 | |
| A | FR-A- 710 830 (ODDA SMELTEVERK A/S AND E. JOHNSON)<br>* Abstract *<br>--- | 1 | TECHNICAL FIELDS SEARCHED (Int. Cl.4) |
| A | DE-C- 680 101 (BERG WERKSGESELLSCHAFT HIBERNIA)<br>* Claims *<br>--- | 5 | C 05 B |
| A | BE-A- 526 307 (BADISCHE ANILIN- & SODA-FABRIK AG)<br>* Example 3; claim *<br>--- | 5 | |
| A | GB-A-1 048 134 (FISONS FERTILIZERS LTD)<br>* Claims; page 2, lines 33-56 *<br>--- | 1 | |
| A | US-A-3 396 003 (K.C. SCHEEL et.al.)<br>* Claims; column 1, lines 24-50 *<br>--- -/- | 4 | |

The present search report has been drawn up for all claims

| Place of search | Date of completion of the search | Examiner |
|---|---|---|
| THE HAGUE | 11-04-1989 | SCHUT,R.J. |

Application Number

EP 88 60 0014

European Patent
Office ·

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | FR-A- 998 511 (SOCIETE ANONYME DES USINES DIOR) <br> * Abstract * <br> ----- | 3 | |

TECHNICAL FIELDS
SEARCHED (Int. Cl.4)

The present search report has been drawn up for all claims

| Place of search | Date of completion of the search | Examiner |
|---|---|---|
| THE HAGUE | 11-04-1989 | SCHUT,R.J. |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

     .......................................................................
& : member of the same patent family, corresponding
   document

EPO FORM 1503 03.82 (P0401)